# EUROPÄISCHE PATENTSCHRIFT

(11) **EP 3 035 431 B1**
(45) Veröffentlichungstag und Bekanntmachung des Hinweises auf die Patenterteilung: **24.04.2019**
(21) Anmeldenummer: 15193503.8
(22) Anmeldetag: 06.11.2015
(51) Int. Cl.: H01M 8/2475, H01M 8/04014, H01M 8/04007, H01M 8/04082, H01M 8/0612, H01M 8/12, H01M 8/2425, H01M 8/124

(54) **BRENNSTOFFZELLENMODUL UND VERFAHREN ZUM BETRIEB EINES BRENNSTOFFZELLENMODULS**
FUEL CELL MODULE AND METHOD FOR OPERATING A FUEL CELL MODULE
MODULE DE PILES A COMBUSTIBLE ET PROCEDE DE FONCTIONNEMENT D'UN MODULE DE PILES A COMBUSTIBLE

(30) Priorität: 19.12.2014 EP 14199227
(43) Veröffentlichungstag der Anmeldung: 22.06.2016
(73) Patentinhaber: Hexis AG, 8404 Winterthur (CH)
(72) Erfinder: Denzler, Roland, 8484 Weisslingen (CH); Mai, Andreas, Dr., 78462 Konstanz (DE); Meier, Christoph, 8406 Winterthur (CH)
(74) Vertreter: Intellectual Property Services GmbH

(56) Entgegenhaltungen:
- EP-A1- 0 580 918
- JP-A- 2008 108 722
- US-A1- 2010 015 503

## Beschreibung

Die Erfindung betrifft ein Brennstoffzellenmodul gemäss dem Oberbegriff des Anspruchs 1 und ein Verfahren zum Betrieb eines Brennstoffzellenmoduls gemäss dem Oberbegriff des Anspruchs 15.

Brennstoffzellen ermöglichen eine Nutzung von Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden dazu gasförmige Ströme zweier Edukte getrennt durch die Zellen geführt. Das erste Edukt in Form von Umgebungsluft oder kurz Luft, enthält oxidierende Komponenten, das zweite Edukt reduzierende Komponenten. Als zweites Edukt wird insbesondere ein Methan enthaltendes Verbrennungsgas (z. B. Erdgas) verwendet, das vor dem Eintritt in die Zellen durch einen Reformer geführt und dort in die reduzierenden Komponenten Wasserstoff und Kohlenmonoxid, das so genannte Prozessgas umgewandelt wird. Im Folgenden wird das zweite Edukt als Verbrennungsgas oder Erdgas bezeichnet, worunter auch andere geeignete Gase mit reduzierenden Komponenten verstanden werden sollen.

Jede Brennstoffzelle umfasst zwei Teile, nämlich ein sogenanntes PEN-Element (kurz PEN genannt) und einen scheibenförmigen Interkonnektor. Das PEN-Element, das aus mindestens drei Schichten, nämlich P (Katode = positive Elektrode), E (Elektrolyt) und N (Anode) besteht, ist ein elektrochemisch aktives Element, mit dem die elektrochemischen Reaktionen durchführbar sind (bei 700 - 900 °C); es hat die Form einer dünnen, beispielsweise kreisförmigen Scheibe, die aus einem schichtförmigen Feststoffelektrolyten und zwei durch Beschichten aufgebrachten Elektroden, P bzw. N, besteht.

Der Interkonnektor trennt bei einem Zellenstapel aus mehreren Brennstoffzellen die Luft vom Prozessgas. Dafür weist der Interkonnektor zur Führung der Medien auf einer so genannten Luftseite Luft-Interkonnektorkanäle und auf einer so genannten Gasseite Prozessgas-Interkonnektorkanale auf.

Die zugeführte Luft dient nicht nur als Reaktionsedukt, sondern insbesondere auch zur Kühlung der Brennstoffzellen und damit zur Abfuhr von Wärme von den Brennstoffzellen.

Ein Brennstoffzellenmodul weist meist mehrere Brennstoffzellen auf, die in einem so genannten Zellenstapel angeordnet sind. Die einzelnen Brennstoffzellen sind dann in einer Axialrichtung gestapelt und werden gemeinsam mit Erdgas und Luft versorgt. Ein derartiges Brennstoffzellenmodul sowie ein Verfahren zum Betrieb eines solchen Brennstoffzellenmoduls werden beispielsweise in der EP 1 864 347 B1 beschrieben.

Die EP 0 580 918 A1 und die US 2010/015503 A1 beschreiben ebenfalls ein derartiges Brennstoffzellemodul. Dem Zellestapel wird dabei über seine komplette Höhe/Axialrichtung gleichmässig Luft zugeführt, womit eine gleichmässige Kühlung der einzelnen Brennstoffzellen erreicht wird.

Untersuchungen der Anmelderin haben gezeigt, dass eine Temperaturverteilung in Axialrichtung des Zellenstapels sowohl Auswirkungen auf den Wirkungsgrad des Brennstoffzellenmoduls, als auch auf eine gleichmässige Alterung der einzelnen Brennstoffzellen hat.

Die EP 2 775 557 A1 beschreibt ein Brennstoffzellenmodul, bei dem die Brennstoffzellen in der Mitte des Zellenstapels stärker gekühlt werden, als die weiter aussen liegenden Brennstoffzellen. Dies wird dadurch erreicht, dass die Luft vor dem Verteilen auf die einzelnen Brennstoffzellen zunächst durch den Zellenstapel geführt wird und damit bereits vor dem Erreichen eines Luftverteilraums in Kühlkontakt mit den in der Mitte des Zellenstapels angeordneten Brennstoffzellen kommt. Damit werden zum einen diese Brennstoffzellen immer mit der gesamten zugeführten Luft gekühlt und zum anderen wird die Luft dabei erwärmt, so dass den weiter aussen liegenden Brennstoffzellen nur vorgewärmte Luft zugeführt werden kann.

Es ist damit insbesondere die Aufgabe der Erfindung, ein Brennstoffzellenmodul und ein Verfahren zum Betrieb eines Brennstoffzellenmoduls vorzuschlagen, welche einen hohen Wirkungsgrad und/oder eine gleichmässige Alterung der Brennstoffzellen ermöglichen. Erfindungsgemäß wird diese Aufgabe mit einem Brennstoffzellenmodul mit den Merkmalen des Anspruchs 1 und ein Verfahren zum Betrieb eines Brennstoffzellenmoduls mit den Merkmalen des Anspruchs 15 gelöst.

Das Brennstoffzellenmodul verfügt über in einem Zellenstapel angeordnete Brennstoffzellen, denen mittels eines Luftzuführsystems über einen Luftverteilraum Luft zum Betreiben oder Kühlen zugeführt wird. Die Luft dient insbesondere nicht nur zum Kühlen, sondern liefert auch den Sauerstoff für die in den Brennstoffzellen stattfindenden elektrochemischen Prozesse und damit zum Betrieb der Brennstoffzellen. Der dabei entstehende Luftstrom kann dabei als Primärluftstrom bezeichnet werden. Die Brennstoffzellen sind in einer Axialrichtung gestapelt. Das Luftzuführsystem ist so ausgeführt, dass sich in Axialrichtung eine ungleichmässig starke Kühlung der Brennstoffzellendurch durch die zugeführte Luft ergibt.

Erfindungsgemäss ist das Luftzuführsystem vollständig radial ausserhalb des Zellenstapels angeordnet. Damit wird erreicht, dass die Luft nicht schon vor dem Eintritt in den Luftverteilraums sondern erst nach Verlassen des Luftverteilraums in Kühlkontakt mit den Brennstoffzellen kommt. Damit wird vorteilhaft ermöglicht, dass kühle, also nicht bereits durch die Brennstoffzellen erwärmte Luft an alle Brennstoffzellen des Zellenstapels geleitet werden kann. Dies ermöglicht eine sehr genaue und gezielte Dosierung der Kühlung der einzelnen Brennstoffzellen und damit eine besonders gleichmässige Temperaturverteilung innerhalb des Zellenstapels.

Unter "radial" oder radialer Richtung soll in diesem Zusammenhang senkrecht zur genannten Axialrichtung verstanden werden. Die Anordnung "ausserhalb" bezieht sich auf eine Achse in Axialrichtung, die durch die Flächenschwerpunkte Oberflächen in radialer Richtung der einzelnen Brennstoffzellen verläuft. Bei scheibenförmigen Brennstoffzellen verläuft die genannte Achse damit durch ihre Mittelpunkte und bei rechteckigen oder quadratischen Brennstoffzellen durch die Schnittpunkte ihrer Diagonalen.

Der Bedarf an Kühlung durch die zugeführte Luft der einzelnen Brennstoffzellen ist massgeblich von ihrer Position im Zellenstapel in Axialrichtung abhängig. Unterschiede ergeben sich insbesondere auf Grund unterschiedlicher Wärmeabfuhr auf Grund von Strahlung, Konvektion und Wärmeleitung an andere Bauteile, die in mechanischem Kontakt oder in Sichtkontakt zu den Brennstoffzellen angeordnet sind. Beispielsweise ist die Wärmeabfuhr durch die genannten Effekte bei einer Brennstoffzelle, die an einem Ende des Zellenstapels angeordnet ist, höher wie bei einer Brennstoffzelle, die in der Mitte des Zellenstapels angeordnet ist. Damit unterscheidet sich auch der Kühlbedarf der einzelnen Brennstoffzellen. Die Kühlung durch die zugeführte Luft kann dabei als eine aktive Kühlung und der Wärmeverlust durch Strahlung, Konvektion und Wärmeleitung als eine passive Kühlung angesehen werden.

Durch die unterschiedlich starke Kühlung in Axialrichtung kann diesen unterschiedlichen Bedarfen an aktiver Kühlung Rechnung getragen werden und sehr geringe Temperaturunterschiede in Axialrichtung der Zellen innerhalb des Zellenstapels erreicht werden. Brennstoffzellen haben in einem bestimmten Temperaturbereich von beispielsweise 800 - 850 °C ihren optimalen Wirkungsgrad und ihr optimales Alterungsverhalten. Durch die geringen Temperaturunterschiede können die einzelnen Elemente des Brennstoffzellenmoduls so aufeinander abgestimmt werden, dass alle Brennstoffzellen des Zellenstapels im optimalen Temperaturbereich betrieben werden. Damit weist jede Brennstoffzelle und damit auch das gesamte Brennstoffzellenmodul einen sehr hohen Wirkungsgrad und ein sehr gutes Alterungsverhalten auf. Ausserdem dehnen sich dann alle Brennstoffzellen und damit verbundenen Bauteil auf Grund ihrer nahezu gleichen Temperatur nahezu gleich stark aus und es entstehen nur sehr geringe Spannungen auf Grund von unterschiedlichen Wärmeausdehnungen der einzelnen Bauteile.

Die Brennstoffzellen sind insbesondere als Hochtemperatur-Brennstoffzellen des SOFC-Typs ("Solid Oxid Fuel Cell") ausgeführt. Als Luft wird insbesondere Umgebungsluft verwendet, die auch vor der Zuführung zum Zellenstapel gefiltert werden kann. Im Betriebszustand des Brennstoffzellenmoduls ist die Axialrichtung üblicherweise senkrecht zum Erdboden ausgerichtet. Wenn im Folgenden von "oben" und "unten" die Rede ist, so bezieht sich das auf die beschriebene Ausrichtung des Brennstoffzellenmoduls im Betriebszustand.

In Ausgestaltung der Erfindung wird die unterschiedlich starke Kühlung dadurch erreicht, dass der Zellenstapel in Axialrichtung eine Gesamt-Axialausdehnung s_total aufweist und das Luftzuführsystem so ausgeführt ist, dass die Luft in den Luftverteilraum nur in einem Zuführbereich zugeführt wird, der eine Axialausdehnung s_part in Axialrichtung aufweist, die kleiner als die Gesamt-Axialausdehnung s_total des Zellenstapels ist. Damit kann die Temperaturverteilung in Axialrichtung und damit der Wirkungsgrad und die Alterung der Brennstoffzellen positiv beeinflusst werden. Innerhalb des Luftverteilraums verteilt sich dann die zugeführte Luft insbesondere in Axialrichtung, so dass alle Brennstoffzellen, also auch die in Axialrichtung ausserhalb des Zuführbereichs angeordnet sind, mit Luft versorgt werden. Damit ergibt sich im Luftverteilraum eine Luftverteilung, die als Sekundärluftstrom bezeichnet werden kann. Das Luftzuführsystem ist dabei insbesondere so ausgeführt, dass die Kühlung der Brennstoffzellen im gesamten Zuführbereich in Axialrichtung gleich stark ist oder zumindest als gleich stark angesehen werden kann.

Es ist aber auch möglich, dass dem Luftverteilraum über die Gesamt-Axialausdehnung Luft in einem Primärluftstrom zugeführt wird und die unterschiedlich starke Kühlung in Axialrichtung durch unterschiedlich ausgeführte Durchgangsöffnungen, beispielsweise Durchgangsöffnungen für Luft mit unterschiedlichen Durchmessern, erreicht wird. Beispielsweise können an den Enden des Zellenstapels Durchgangsöffnungen mit einem kleineren Durchmesser als Durchgangsöffnungen in der Mitte des Zellenstapels vorgesehen sein.

Es ist auch möglich, dass das Luftzuführsystem so ausgeführt ist, dass die Luft nur in einem Zuführbereich zugeführt wird, der eine Axialausdehnung s_part in Axialrichtung aufweist, die kleiner als die Gesamt-Axialausdehnung s_total des Zellenstapels ist, und sich zusätzlich die Durchgangsöffnungen innerhalb des Zuführbereichs in Axialrichtung unterscheiden, also beispielsweise Durchgangsöffnungen unterschiedliche Durchmesser aufweisen.

Ausserdem können sich die Durchgangsöffnungen auch in einer Richtung quer zur Axialrichtung unterscheiden.

In Ausgestaltung der Erfindung beträgt die Axialausdehnung s_part des Zuführbereichs höchstens 80 %, insbesondere höchstens 70 % und speziell höchstens 50 % der Gesamt-Axialausdehnung s_total des Zellenstapels.

In Ausgestaltung der Erfindung weist der Luftverteilraum einen ersten Restbereich mit einer Axialausdehnung s_rest1 auf, in dem keine Luft zugeführt wird, und der erste Restbereich ist an einem ersten Ende des Zellenstapels angeordnet. Das erste Ende des Zellenstapels kann dabei entweder oben oder unten am Zellenstapel angeordnet sein. Damit wird erreicht, dass in einem Restbereich am oberen oder unteren Ende des Zellestapels keine Luft im Primärluftstrom zum Kühlen auf den Zellenstapel geleitet wird. Der Luftverteilraum ist aber wie oben beschrieben so ausgeführt, das dennoch die erforderliche Luft für die elektrochemische Reaktion an alle Brennstoffzellen, also auch an die im Restbereich angeordneten Brennstoffzellen gelangt. Diese Verteilung der Luft erfolgt im Luftverteilraum, nachdem die Luft aus dem Luftzuführsystem ausgetreten ist.

Damit lässt sich eine besonders gleichmässige Temperaturverteilung in Axialrichtung des Zellenstapels erreichen, da an einem Ende des Zellenstapels insbesondere über Strahlung, Konvektion und Wärmeleitung mehr Wärme abgeführt wird wie an den weiter innen liegenden Bereichen des Zellenstapels. Wenn auch am Ende des Zellenstapels ebenso stark wie in den weiter innen liegenden Bereiche gekühlt werden würde, wäre die Temperatur der am Ende angeordneten Brennstoffzellen deutlich geringer als der weiter innen angeordneten Brennstoffzellen. Damit lassen sich besonders geringe Temperaturunterschiede in Axialrichtung der Zellen innerhalb des Zellenstapels erreichen.

In Ausgestaltung der Erfindung weist der Luftverteilraum einen zweiten Restbereich mit einer Axialausdehnung s_rest2 auf, in dem keine Luft zugeführt wird. Der zweite Restbereich ist dabei an einem dem ersten Ende gegenüber liegenden zweiten Ende des Zellenstapels angeordnet. Damit wird erreicht, dass in Restbereichen am oberen und unteren Ende des Zellestapels keine Luft in einem Primärluftstrom zum Kühlen auf den Zellestapel geleitet wird. Damit kann die erhöhte Strahlung, Konvektion und Wärmeleitung an beiden Enden des Zellenstapels berücksichtigt werden und besonders kleine Temperaturunterschiede in Axialrichtung des Zellenstapels ermöglicht werden.

Es ist insbesondere vorteilhaft, wenn der erste und der zweite Restbereich an den beiden Enden des Zellenstapels unterschiedliche Axialausdehnungen s_rest1, s_rest2 aufweisen. Durch die unterschiedlichen Axialausdehnungen kann einem unterschiedlichen Bedarf an aktiver Kühlung an den beiden Enden des Zellenstapels Rechnung getragen werden. Der unterschiedliche Bedarf an aktiver Kühlung kann beispielsweise von unterschiedlich ausgeführten Isolationen an den beiden Ende oder verschiedenen angrenzenden Bauteilen herrühren.

Der erste Restbereich und sofern vorhanden der zweite Restbereich weisen insbesondere Axialausdehnungen s_rest1, s_rest2 auf, die mindestens 10 %, insbesondere mindestens 15 % und speziell mindestens 25% der Gesamt-Axialausdehnung s_total des Zellenstapels betragen.

In Ausgestaltung der Erfindung weisen die Brennstoffzellen einen Interkonnektor und ein PEN-Element auf. Zwischen dem Interkonnektor und dem PEN-Element sind Luft-Interkonnektorkanäle für eine Durchströmung mit Luft ausgebildet. Die Luft strömt über einen Einlass in die Luft-Interkonnektorkanäle ein. Eine Gesamtquerschnittsfläche der Luft-Interkonnektorkanäle am Einlass ist nicht bei allen Brennstoffzellen des Zellenstapels identisch. Je grösser die genannte Gesamtquerschnittsfläche ist, desto mehr Luft strömt vom Luftverteilraum in die Luft-Interkonnektorkanäle und desto stärker ist die aktive Kühlung der Brennstoffzellen durch die durchströmende Luft. Die Gesamtquerschnittsflächen können insbesondere in den Bereichen mit einem erhöhten Bedarf an aktiver Kühlung grösser gewählt werden als in Bereichen mit niedrigerem Bedarf an aktiver Kühlung. Die Gesamtquerschnittsflächen sind damit insbesondere im Bereich der beiden Enden des Zellenstapels geringer als in einem mittleren Bereich. Damit kann eine unterschiedlich starke Kühlung durch die zugeführte Luft erreicht werden. Dies kann zusätzlich zur beschriebenen Zuführung der Luft nur in einem axial begrenzten Zuführbereich oder auch bei einem sich über die Gesamt-Axialausdehnung erstreckenden Zuführbereich vorgesehen sein.

Die Gesamtquerschnittsflächen können insbesondere durch unterschiedliche Höhen der Luft-Interkonnektorkanäle in axialer Richtung gebildet werden. Die Höhen der Luft-Interkonnektorkanäle können beispielsweise zwischen 0,7 und 2,0 mm betragen.

Es ist auch möglich, dass sich Gesamtquerschnittsflächen von Prozessgas-Interkonnektorkanälen unterscheiden.

In Ausgestaltung der Erfindung ist das Luftzuführsystem so ausgeführt, dass die Luft direkt auf ein in einem Wärmeaustausch mit dem Zellenstapel stehendes Bauteil insbesondere einen Abgaskanal zum Abführen von Abgas der Brennstoffzellen geleitet wird. Das genannte Bauteil und insbesondere der Abgaskanal sind am Zellenstapel angeordnet. Das genannte Bauteil kann zusätzlich eine andere Funktion erfüllen oder auch nur für Kühlung der Brennstoffzellen vorhanden sein. Über den genannten Wärmeaustausch, insbesondere einen Strahlungsaustausch werden dann die weiter innen liegenden Brennstoffzellen gekühlt. Untersuchungen haben ergeben, dass dies eine besonders effektive Kühlung ermöglicht. Unter "Luft direkt auf das Bauteil, insbesondere auf den Abgaskanal leiten" soll in diesem Zusammenhang insbesondere verstanden werden, dass die Luft vor dem Leiten auf das Bauteil und insbesondere auf den Abgaskanal nicht vorgewärmt wird, sondern mit einer möglichst niedrigen Temperatur auf das Bauteil und insbesondere auf den Abgaskanal geleitet wird. Dies ermöglicht eine einfache Luftführung, was ein einfaches und damit kostengünstiges Luftzufuhrsystem ermöglicht.

Die Brennstoffzellen weisen insbesondere quer zur Axialrichtung eine runde Aussenkontur auf, an der vier, insbesondere genau vier Abgaskanäle angeordnet sind. Die vier Abgaskanäle sind insbesondere gleichmässig um den Aussenumfang der Brennstoffzellen verteilt. Damit kann ein kompakter Aufbau des Brennstoffzellenmoduls und ein gleichmässiger Temperaturverlauf quer zur Axialrichtung erreicht werden. Die Luft strömt nach dem Auftreffen auf die Abgaskanäle aussen und hautsächlich quer zur Axialrichtung an ihnen entlang und wird dann zwischen den Abgaskanälen den Brennstoffzellen für die elektrochemische Reaktion zugeführt.

In Ausgestaltung der Erfindung ist der Zellenstapel in einer Isolationshülle angeordnet, welche im Zuführbereich Durchgangsöffnungen aufweist. Da die Brennstoffzellen im Betrieb insbesondere Temperaturen von über 750°C aufweisen, ist eine Isolation gegenüber der Umwelt und damit eine Isolationshülle zwingend erforderlich. Diese Isolationshülle ist insbesondere aus einem Keramikmaterial hergestellt, in das einfach und kostengünstig Durchgangsöffnungen eingebracht werden können. Durch den beschriebenen Aufbau wird damit ein kostengünstiges Luftzuführsystem ermöglicht. Die Durchgangsöffnungen haben insbesondere alle den gleichen Durchmesser. Die Durchmesser können sich aber auch in Axialrichtung und/oder quer zur Axialrichtung unterscheiden. Damit könnten bestimmte Stellen des Zellenstapels stärker oder weniger stark gekühlt werden.

In Ausgestaltung der Erfindung ist an einer Axialposition des Zuführbereichs jedem Abgaskanal höchstens eine Durchgangsöffnung zugeordnet. Die Isolationshülle weist damit an jeder Axialposition entweder keine Durchgangsöffnung oder höchstens, insbesondere genau so viele Durchgangsöffnungen auf wie die Anzahl der Abgaskanäle. Damit sind besonders wenige Durchgangsöffnungen notwendig, was eine kostengünstige Isolationshülle ermöglicht.

In Ausgestaltung der Erfindung ist an der Isolationshülle ein Versorgungselement mit einem Versorgungsraum so angeordnet, dass die Durchgangsöffnungen mit dem Versorgungsraum verbunden sind. Das Versorgungselement weist eine Axialausdehnung s_ver auf, die kleiner als die Gesamt-Axialausdehnung s_total des Zellenstapels ist. Damit ist für das Versorgungselement nur ein geringer Materialaufwand notwendig, was ein kostengünstiges Versorgungselement ermöglicht.

Die Isolationshülle weist insbesondere eine runde Aussenkontur auf und das Versorgungselement ist ringförmig um die Isolationshülle herum angeordnet. Dies ermöglicht einen einfachen und kostengünstigen Aufbau des Brennstoffzellenmoduls und ausserdem eine kompakte Ausführung.

Das Versorgungselement weist insbesondere nur einen Luftanschlussstutzen auf. Dies ermöglicht einen besonders einfachen und kostengünstigen Aufbau des Brennstoffzellenmoduls.

Die oben genannte Aufgabe wird auch von einem Verfahren zum Betrieb eines Brennstoffzellenmoduls gelöst, wobei das Brennstoffzellenmodul über in einem Zellenstapel angeordnete Brennstoffzellen und ein Luftzuführsystem zur Zuführung von Luft zum Kühlen der Brennstoffzellen verfügt und die Brennstoffzellen in einer Axialrichtung gestapelt sind, werden die Brennstoffzellen in Axialrichtung ungleichmässig stark gekühlt. Erfindungsgemäss ist das Luftzuführsystem vollständig radial ausserhalb des Zellenstapels angeordnet. Die Luft wird damit insbesondere von radial aussen dem Luftverteilraum und dann den Brennstoffzellen zugeführt.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: ein Brennstoffzellenmodul in einem Längsschnitt ,
- Fig. 2: das Brennstoffzellenmodul in einem Querschnitt und
- Fig. 3: einen Ausschnitt eines Zellenstapels in einer Seitenansicht in einer sehr vereinfachten Darstellung.

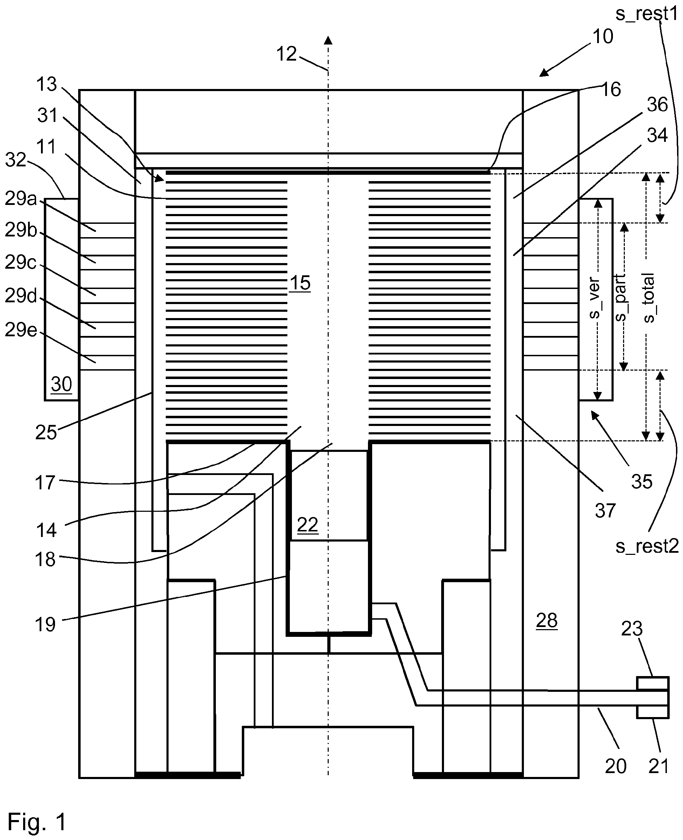

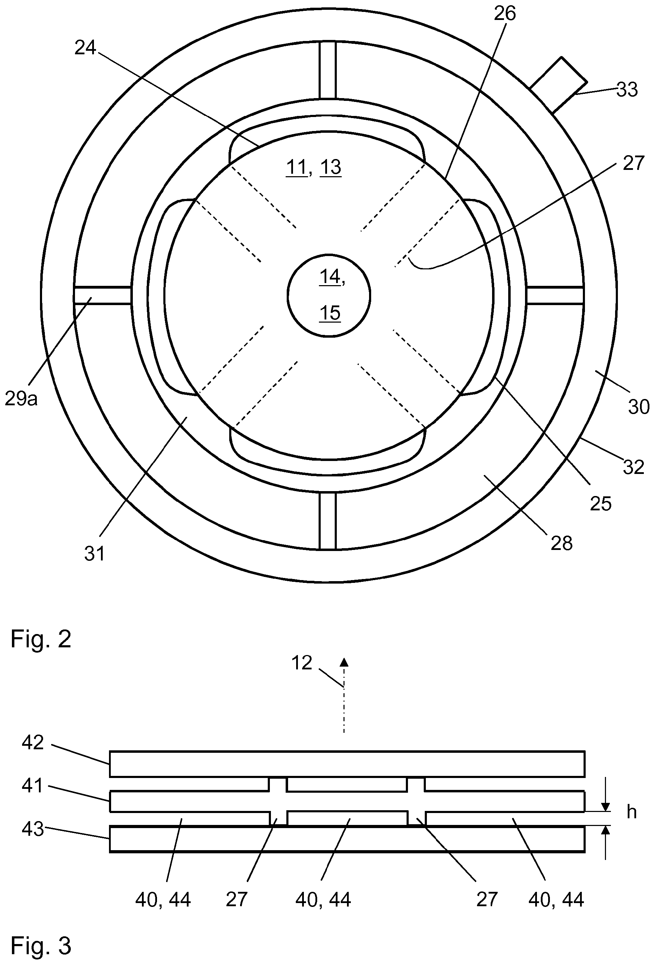

Gemäss Fig. 1 weist ein Brennstoffzellenmodul 10 mehrere Brennstoffzellen 11 auf, die in einer Axialrichtung 12 aufeinander gestapelt sind und so einen Zellenstapel 13 bilden. Die einzelnen Brennstoffzellen 11 weisen eine scheibenförmige Grundform mit einem kreisrunden Querschnitt (siehe Fig. 2) und damit quer bzw. senkrecht zur Axialrichtung 12 eine runde Aussenkontur auf, so dass der Zellenstapel 13 eine zylinderförmige Grundform aufweist. Der die Axialrichtung 12 anzeigende Pfeil verläuft durch die Mittelpunkte der scheibenförmigen Brennstoffzellen 11. Die Brennstoffzellen können aber auch einen anderen Querschnitt, wie beispielsweise ellispsenförmig, rechteckig oder quadratisch aufweisen.

Die Brennstoffzellen 11 weisen mittig eine Innenöffnung 14 in Axialrichtung 12 auf (siehe Fig. 2), so dass sich im Zellenstapel 13 ein zylinderförmiger Verteilkanal 15 ausbildet, von dem aus jeder Brennstoffzelle 11 Prozessgas für die in den Brennstoffzellen 11 stattfindende elektrochemische Reaktion zugeführt werden kann. Das Prozessgas kann auch auf eine andere Weise, beispielsweise von aussen zugeführt werden.

Der Zellenstapel 13 wird nach oben von einem oberen Stromsammler 16 abgeschlossen. Der obere Stromsammler 16 hat eine mit den Brennstoffzellen 11 identische Grundform, weist aber keine Innenöffnung auf. Der obere Stromsammler 16 bildet die Anode der vom Zellenstapel 13 erzeugten Spannung. Er verfügt über einen nicht dargestellten elektrischen Anschluss, über den eine elektrische Kontaktierung realisiert werden kann.

Der Zellenstapel 13 wird nach unten von einem unteren Stromsammler 17 abgeschlossen, der die Kathode der vom Zellenstapel 13 erzeugten Spannung bildet. Der untere Stromsammler 17 hat ebenfalls eine mit den Brennstoffzellen 11 identische Grundform und weist eine kreisrunde Innenöffnung 18 auf. Der untere Stromsammler 17 ist mit einer hohlzylinderförmigen Hülse 19 verschweisst, welche mit einer Gaszuführleitung 20 verbunden ist, an der ein Gasanschluss 21 angeordnet ist. Über den Gasanschluss 21, die Gaszuführleitung 20, die Hülse 19 und die Innenöffnung 18 des unteren Stromsammlers 17 kann damit Erdgas als Verbrennungsgas dem Verteilkanal 15 des Zellenstapels 13 zugeführt werden. In der Hülse 19 ist ein Reformer 22 angeordnet, in dem das im zugeführten Erdgas enthaltene Methan vor der Zuführung in den Verteilkanal 15 in Wasserstoff und Kohlenmonoxid, also das so genannte Prozessgas umgewandelt wird. Der Stromsammler 17, die Hülse 19, die Gaszuführleitung 20 und der Gasanschluss 21 sind aus einem elektrisch leitenden Material in Form von Stahl ausgeführt, so dass der Gasanschluss 21 mit dem Stromsammler 17 elektrisch leitend verbunden ist. Am Gasanschluss 21 ist ein nicht näher dargestellter elektrischer Anschluss 23 angeordnet, über welchen eine elektrische Verbindung zum unteren Stromsammler 17 hergestellt werden kann.

Die für die in den Brennstoffzellen 11 stattfindende elektrochemische Reaktion notwenige Luft wird dem Zellenstapel 13 über einen Luftverteilraum (31) von aussen zugeführt. Dies wird anhand von Fig. 2 erläutert. Gleichmässig an einer runden Aussenkontur 24 des Zellenstapels 13 und damit der Brennstoffzellen 11 verteilt sind vier identische Abgaskanäle 25 angeordnet. Zwischen den Abgaskanälen 25 ergeben sich Lücken 26, über die den Brennstoffzellen 11 Luft zugeführt werden kann. Die Brennstoffzellen 11 verfügen über Luftleitelemente 27, die von den Lücken 26 in Richtung Verteilkanal 15 verlaufen. Mit den Luftleitelementen 27 werden Luft-Interkonnektorkanäle 40 gebildet (siehe Fig. 3). Damit kann Luft ausgehend von den Lücken 26 über die Luftleitelemente 27 in Richtung Verteilkanal 15 strömen und von dort wieder nach aussen, wobei die elektrochemische Reaktion mit dem Wasserstoff und dem Kohlenmonoxid stattfinden kann. Die Abgase der elektrochemischen Reaktion, sowie noch nicht reagierte Bestandteile gelangen in die Abgaskanäle 25, in denen auch eine so genannte Nachverbrennung, also eine Oxidation des nicht reagierten Wasserstoffs und des Kohlenmonoxids stattfindet. Über die Abgaskanäle 25 wird das Abgas auf nicht näher dargestellte Weise abgeführt.

Um den Zellenstapel 13 herum ist eine hohlzylinderförmige Isolationshülle 28 angeordnet. Die Isolationshülle 28 ist aus einem keramischen Material ausgeführt und weist von aussen nach innen führende Durchgangsöffnungen 29a auf, wobei in der Schnittebene der Fig. 2 vier Durchgangsöffnungen 29a angeordnet sind. Über die Durchgangsöffnungen 29a kann Luft aus einem aussen ausgebildeten Versorgungsraum 30 in den zwischen Zellenstapel 13 und Isolationshülle 28 ausgebildeten Luftverteilraum 31 zugeführt werden. Die Durchgangsöffnungen 29a sind dabei so angeordnet, dass sie die Luft direkt auf die Abgaskanäle 25 leiten. Die Zuführung der Luft zum Luftverteilraum erfolgt in einem so genannten Primärluftstrom. Die Luft strömt dann hauptsächlich in Umfangsrichtung an den Abgaskanälen 25 entlang zu den oben beschriebenen Lücken 26, um dann wie beschrieben in Richtung Verteilkanal 15 zu strömen. Die zugeführte Luft kühlt damit die Abgaskanäle 25, welche dann über Strahlungsaustausch den Zellenstapel 13 kühlen. Die Luft strömt auch teilweise in Axialrichtung, um so auch zu den Brennstoffzellen 11 zu gelangen, an deren Axialposition nicht direkt eine Durchgangsöffnung angeordnet ist. Da ein Druckverlust beim Strömen in die Brennstoffzellen 11 hinein vergleichsweise gross ist, verteilt sich die Luft in axialer Richtung des Verteilraums 31 so, dass alle Brennstoffzellen 11 gleichmässig mit Luft versorgt werden. Die Verteilung der Luft innerhalb des Luftverteilraums 31 wird dabei als Sekundärluftströmung bezeichnet.

Der Versorgungsraum 30 wird von einem Versorgungselement 32 nach aussen begrenzt. Das Versorgungselement 32 ist kreisförmig um die Isolationshülle 28 herum angeordnet. Dem Versorgungsraum 30 wird nur über einen Luftanschlussstutzen 33 Luft zugeführt. Dabei handelt es sich um die für den Betrieb und die Kühlung notwendige Luft. Über den Luftanschlussstutzen 33 wird so viel Luft zugeführt, dass sich im Versorgungsraum 30 ein quasi konstanter Druck ausbildet.

Wie in Fig. 1 dargestellt, weist das Versorgungselement 32 eine Axialausdehnung s_ver in Axialrichtung 12 auf, die kleiner ist als eine Gesamt-Axialausdehnung s_total des Zellenstapels 13. Unter der Axialausdehnung s_total des Zellenstapels 13 wird dabei der Abstand in Axialrichtung 12 zwischen einer Oberseite des unteren Stromsammlers 17 und einer Unterseite des oberen Stromsammlers 16 verstanden.

Dem Luftverteilraum 31 wird nur in einem Zuführbereich 34 Luft zugeführt, der eine Axialausdehnung s_part in Axialrichtung 12 aufweist, die geringer als die Gesamt-Axialausdehnung s_total des Zellenstapels 13 und auch der Axialausdehnung s_ver des Versorgungselements 32 ist. Dazu weist die Isolationshülle 28 in Axialrichtung 12 auf die Axialausdehnung s_part des Zuführbereichs 34 verteilt jeweils vier Durchgangsöffnungen 29a, 29b, 29c, 29d, 29e auf, die gleich wie die in Fig. 2 dargestellten Durchgangsöffnungen 29a angeordnet sind. Damit sind die Durchgangsöffnungen 29a, 29b, 29c, 29d, 29e auf insgesamt fünf Ebenen senkrecht zur Axialrichtung 12 angeordnet. Ausserdem ergibt sich damit, dass an einer Axialposition des Zuführbereichs 34 jedem Abgaskanal 25 genau eine Durchgangsöffnung 29a, 29b, 29c, 29d, 29e zugeordnet ist. Unter der Axialausdehnung s_part des Zuführbereichs 34 soll dabei der Abstand in Axialrichtung 12 zwischen einer Unterkante der untersten Durchgangsöffnungen 29e und einer Oberkante der obersten Durchgangsöffnungen 29a verstanden werden.

Das Versorgungselement 32, die Durchgangsöffnungen 29a, 29b, 29c, 29d, 29e und der Luftverteilraum 31 bilden damit ein Luftzuführsystem 35. Das Luftzuführsystem 35 ist also vollständig radial ausserhalb des Zellenstapels 13 angeordnet. Durch die beschriebene Ausführung des Zuführbereichs 34 ergibt sich in Axialrichtung 12 eine ungleichmässig starke Kühlung des Zellenstapels 13 und damit der Brennstoffzellen 11.

Die Durchgangsöffnungen 29a, 29b, 29c, 29d, 29e weisen alle einen identischen Durchmesser auf. Es ist aber auch möglich, dass die Durchgangsöffnungen 29a, 29b, 29c, 29d, 29e in den verschiedenen Ebenen oder auch innerhalb einer Ebene einen unterschiedlichen Durchmesser aufweisen.

Beim in der Fig. 1 dargestellten Brennstoffzellenmodul 10 beträgt die Axialausdehnung s_part des Zuführbereichs 34 ca. 55 % der Gesamt-Axialausdehnung s_total des Zellenstapels 13. Er kann aber auch höchstens 80 %, insbesondere höchstens 70 % oder höchstens 50 % der Gesamt-Axialausdehnung s_total des Zellenstapels 13 betragen.

Der Zuführbereich 34 ist in Axialrichtung 12 so angeordnet, dass sich im Bereich des oberen Stromsammlers 16, welcher ein erstes Ende des Zellenstapels 13 bildet, ein erster Restbereich 36 mit einer Axialausdehnung s_rest1 ausbildet, an dem keine Luft zugeführt wird. Die Axialausdehnung s_rest1 beträgt ca. 20 % der der Gesamt-Axialausdehnung s_total des Zellenstapels 13.

Der Zuführbereich 34 ist in Axialrichtung 12 ausserdem so angeordnet, dass sich im Bereich des unteren Stromsammlers 17, welcher ein zweites Ende des Zellenstapels 13 bildet, ein zweiter Restbereich 37 mit einer Axialausdehnung s_rest2 ausbildet, an dem keine Luft zugeführt wird. Die Axialausdehnung s_rest2 beträgt ca. 26 % der der Gesamt-Axialausdehnung s_total des Zellenstapels 13 und ist damit grösser als die Axialausdehnung s_rest1 des ersten Restbereichs. Es ist aber auch möglich, dass s_rest1 grösser ist als s_rest2.

Der erste Restbereich 36 und der zweite Restbereich 37 weisen Axialausdehnungen s_rest1, s_rest2 auf, die mindestens 10 %, insbesondere mindestens 15 % und speziell mindestens 25% der Gesamt-Axialausdehnung s_total des Zellenstapels 13 betragen.

In Fig. 3 ist eine Seitenansicht eines Ausschnitts des Zellenstapels 13 in einer Seitenansicht dargestellt. Ein Interkonnektor 41 ist in Axialrichtung 12 zwischen zwei PEN-Elementen 42, 43 angeordnet. Der Interkonnektor 41 weist ebenfalls eine scheibenförmige Grundform auf und verfügt an seiner Unterseite über zwei im Querschnitt rechteckige Luftleitelemente 27, die quer zur Axialrichtung 12 nebeneinander angeordnet sind. Zusammen mit dem sich nach unten angrenzenden PEN-Modul 43 werden dadurch jeweils auf beiden Seiten der Luftleitelemente 27 Luft-Interkonnektorkanäle 40 gebildet, die eine Höhe h in Axialrichtung aufweisen, die sich aus der axialen Ausdehnung der Luftleitelemente 27 ergibt. Die zugeführte Luft strömt über Einlässe 44 in die Luft-Interkonnektorkanäle 40 ein. Die Interkonnektoren 41 und insbesondere die Höhe der Luft-Interkonnektorkanäle 40 der einzelnen Brennstoffzellen 11 können dabei immer gleich oder unterschiedlich sein. Wenn die Interkonnektoren 41 aller Brennstoffzellen 11 des Zellenstapels gleich ausgeführt sind, so ist auch eine Gesamtquerschnittsfläche der Luft-Interkonnektorkanäle 40 aller Brennstoffzellen 11 des Zellenstapels 13 identisch. Unterscheiden sich die Interkonnektoren 41 insbesondere in der Höhe h, so ist die Gesamtquerschnittsfläche der Luft-Interkonnektorkanäle 40 aller Brennstoffzellen 11 des Zellenstapels 13 nicht identisch.

## Patentansprüche

1. Brennstoffzellenmodul mit
- in einem Zellenstapel (13) angeordneten Brennstoffzellen (11) und
- einem Luftzuführsystem (35) zur Zuführung von Luft in einen Luftverteilraum (31) zum Betreiben oder Kühlen der Brennstoffzellen (11),
wobei die Brennstoffzellen (11) in einer Axialrichtung (12) gestapelt sind,
wobei
das Luftzuführsystem (35) vollständig radial ausserhalb des Zellenstapels (13) angeordnet ist, **dadurch gekennzeichnet, dass** das Luftzuführsystem (35) so ausgeführt ist, dass sich in Axialrichtung (12) eine ungleichmäßig starke Kühlung durch die zugeführte Luft der Brennstoffzellen (11) ergibt.

2. Brennstoffzellenmodul nach Anspruch 1,
**dadurch gekennzeichnet, dass**
der Zellenstapel (13) in Axialrichtung (12) eine Gesamt-Axialausdehnung s_total aufweist und das Luftzuführsystem (35) so ausgeführt ist, dass die Luft in den Luftverteilraum (31) nur in einem Zuführbereich (34) zugeführt wird, der eine Axialausdehnung s_part in Axialrichtung (12) aufweist, die kleiner als die Gesamt-Axialausdehnung s_total des Zellenstapels (13) ist.

3. Brennstoffzellenmodul nach Anspruch 2,
**dadurch gekennzeichnet, dass**
die Axialausdehnung s_part des Zuführbereichs (34) höchstens 80 %, insbesondere höchstens 70 % und speziell höchstens 50 % der Gesamt-Axialausdehnung s_total des Zellenstapels (13) beträgt.

4. Brennstoffzellenmodul nach Anspruch 2 oder 3,
**dadurch gekennzeichnet, dass**
der Luftverteilraum (31) einen ersten Restbereich (36) mit einer Axialausdehnung s_rest1 aufweist, in dem keine Luft zugeführt wird, und der erste Restbereich (36) an einem ersten Ende (16) des Zellenstapels (13) angeordnet ist.

5. Brennstoffzellenmodul nach Anspruch 4,
**dadurch gekennzeichnet, dass**
der Luftverteilraum (31) einen zweiten Restbereich (37) mit einer Axialausdehnung s_rest2 aufweist, in dem keine Luft zugeführt wird, und der zweite Restbereich (37) an einem dem ersten Ende (16) gegenüber liegenden zweiten Ende (17) des Zellenstapels (13) angeordnet ist.

6. Brennstoffzellenmodul nach Anspruch 5,
**dadurch gekennzeichnet, dass**
der erste und der zweite Restbereich (36, 37) unterschiedliche Axialausdehnungen s_rest1, s_rest2 aufweisen.

7. Brennstoffzellenmodul nach einem der Ansprüche 1 bis 6,
**dadurch gekennzeichnet, dass** die Brennstoffzellen (11) einen Interkonnektor (41) und ein PEN-Element (42, 43) aufweisen und Luft-Interkonnektorkanäle (40) zwischen dem Interkonnektor (41) und dem PEN-Element (42, 43) für eine Durchströmung von Luft vorgesehen sind und Gesamtquerschnittsflächen an Einlässen (44) der Luft-Interkonnektorkanäle (40) nicht bei allen Brennstoffzellen (11) des Zellenstapels (13) identisch sind.

8. Brennstoffzellenmodul nach einem der Ansprüche 1 bis 7,
**dadurch gekennzeichnet, dass**
das Luftzuführsystem (35) so ausgeführt ist, dass die Luft direkt auf ein in einem Wärmeaustausch mit dem Zellenstapel (13) stehendes Bauteil insbesondere einen Abgaskanal (25) zum Abführen von Abgas der Brennstoffzellen (11) geleitet wird.

9. Brennstoffzellenmodul nach Anspruch 8,
**dadurch gekennzeichnet, dass**
die Brennstoffzellen (11) quer zur Axialrichtung (12) eine runde Aussenkontur (24) aufweisen und an der Aussenkontur (24) vier Abgaskanäle (25) angeordnet sind.

10. Brennstoffzellenmodul nach einem der Ansprüche 1 bis 9,
**dadurch gekennzeichnet, dass**
der Zellenstapel (13) in einer Isolationshülle (28) angeordnet ist, welche im Zuführbereich (34) Durchgangsöffnungen (29a, 29b, 29c, 29d, 29e) aufweist.

11. Brennstoffzellenmodul nach Anspruch 9 und 10,
**dadurch gekennzeichnet, dass**
an einer Axialposition des Zuführbereichs (34) jedem Abgaskanal (25) höchstens eine Durchgangsöffnung (29a, 29b, 29c, 29d, 29e) zugeordnet ist.

12. Brennstoffzellenmodul nach Anspruch 11,
**dadurch gekennzeichnet, dass**
an der Isolationshülle (28) ein Versorgungselement (32) mit einem Versorgungsraum (30) so angeordnet ist, dass die Durchgangsöffnungen (29a, 29b, 29c, 29d, 29e) mit dem Versorgungsraum (30) verbunden sind und das Versorgungselement (32) eine Axialausdehnung s_ver aufweist, die kleiner als die Gesamt-Axialausdehnung s_total des Zellenstapels (13) ist.

13. Brennstoffzellenmodul nach Anspruch 12,
**dadurch gekennzeichnet, dass**
die Isolationshülle (28) eine runde Aussenkontur aufweist und das Versorgungselement (32) ringförmig um die Isolationshülle (28) herum angeordnet ist.

14. Brennstoffzellenmodul nach Anspruch 12 oder 13,
**dadurch gekennzeichnet, dass**
das Versorgungselement (32) nur einen Luftanschlussstutzen (33) aufweist.

15. Verfahren zum Betrieb eines Brennstoffzellenmoduls mit
- in einem Zellenstapel (13) angeordneten Brennstoffzellen (11) und
- einem Luftzuführsystem (35) zur Zuführung von Luft in einen Luftverteilraum (31) zum Betreiben oder Kühlen der Brennstoffzellen (11),
wobei die Brennstoffzellen (11) in einer Axialrichtung (12) gestapelt sind, wobei
das Luftzuführsystem (35) vollständig radial ausserhalb des Zellenstapels (13) angeordnet ist, **dadurch gekennzeichnet, dass** die Brennstoffzellen in Axialrichtung ungleichmäßig stark gekühlt werden.

## Claims

1. A fuel cell module comprising
- fuel cells (11) arranged in a cell stack (13) and
- an air supply system (35) for supplying air into an air distribution space (31) for operating or cooling the fuel cells (11),
wherein the fuel cells (11) are stacked in an axial direction (12) wherein
the air supply system (35) is arranged completely radially outside the cell stack (13), **characterized in that** the air supply system (35) is designed such that a cooling results due to the supplied air of the fuel cells (11) which is not of uniform strength in the axial direction (12).

2. A fuel cell module in accordance with claim 1,
**characterized in that**
the cell stack (13) has a total axial extent s_total in the axial direction (12) and the air supply system (35) is designed such that the air is only supplied into the air distribution space (31) in a supply region (34) which has an axial extent s_part in the axial direction (12) which is smaller than the total axial extent s_total of the cell stack (13).

3. A fuel cell module in accordance with claim 2,
**characterized in that**
the axial extent s_part of the supply region (34) amounts to at most 80%, in particular at most 70%, and especially at most 50% of the total axial extent s_total of the cell stack (13).

4. A fuel cell module in accordance with claim 2 or claim 3,
**characterized in that**
the air distribution space (31) has a first residual region (36) having an axial extent s_rest1 in which no air is supplied and the first residual region (36) is arranged at a first end (16) of the cell stack (13).

5. A fuel cell module in accordance with claim 4,
**characterized in that**
the air distribution space (31) has a second residual region (37) having an axial extent s_rest2 in which no air is supplied and the second residual region (37) is arranged at a second end (17) of the cell stack (13) disposed opposite the first end (16).

6. A fuel cell module in accordance with claim 5,
**characterized in that**
the first and the second residual regions (36, 37) have different axial extents s_rest1, s_rest2.

7. A fuel cell module in accordance with any one of the claims 1 to 6,
**characterized in that** the fuel cells (11) have an interconnector (41) and a PEN element (42, 43) and air interconnector passages (40) are provided between the interconnector (41) and the PEN element (42, 43) for a throughflow of air and total cross-sectional surfaces at inlets (44) of the air interconnector passages (40) are not identical in all fuel cells (11) of the fuel stack (13).

8. A fuel cell module in accordance with any one of the claims 1 to 7,
**characterized in that**
the air supply system (35) is designed such that the air is conducted directly onto a component in heat exchange with the cell stack (13), in particular onto an exhaust gas passage (25) for dissipating exhaust gas of the fuel cells (11).

9. A fuel cell module in accordance with claim 8,
**characterized in that**
the fuel cells (11) have a round outer contour (24) transversely to the axial direction (12) and four exhaust gas passages (25) are arranged at the outer contour (24).

10. A fuel cell module in accordance with any one of the claims 1 to 9,
**characterized in that**
the cell stack (13) is arranged in an insulation sleeve (28) which has passage openings (29a, 29b, 29c, 29d, 29e) in the supply region (34).

11. A fuel cell module in accordance with claim 9 and claim 10,
**characterized in that**
at most one passage opening (29a, 29b, 29c, 29d, 29e) is associated with each exhaust gas passage (25) at an axial position of the supply region (34).

12. A fuel cell module in accordance with claim 11,
**characterized in that**
a supply element (32) having a supply space (30) is arranged at the insulation sleeve (28) such that the passage openings (29a, 29b, 29c, 29d, 29e) are connected to the supply space (30) and the supply element (32) has an axial extent s_ver which is smaller than the total axial extent s_total of the cell stack (13).

13. A fuel cell module in accordance with claim 12,
**characterized in that**
the insulation sleeve (28) has a round outer contour and the supply element (32) is arranged in ring shape about the insulation sleeve (28).

14. A fuel cell module in accordance with claim 12 or claim 13,
**characterized in that**
the supply element (32) only has one air connection stub (33).

15. A method of operating a fuel cell module comprising
- fuel cells (11) arranged in a cell stack (13) and
- an air supply system (35) for supplying air into an air distribution space (31) for operating or cooling the fuel cells (11),
wherein the fuel cells (11) are stacked in an axial direction (12), wherein the air supply system (35) is arranged completely radially outside the cell stack (13), **characterized in that** the fuel cells (11) are cooled by different amounts in the axial direction (12).

## Revendications

1. Un module de pile à combustible avec
- des piles à combustible (11) disposées dans un bloc de piles (13) et
- un système d'alimentation en air (35) pour fournir de l'air dans un espace de distribution d'air (31) pour faire fonctionner ou refroidir les piles à combustible (11),
dans lequel les piles à combustible (11) sont empilés dans une direction axiale (12),
dans lequel le système d'alimentation en air (35) est disposé complètement radialement à l'extérieur du bloc de piles (13), **caractérisé en ce que** le système d'alimentation en air (35) est configuré de telle sorte que dans la direction axiale (12) un refroidissement irrégulièrement fort des piles à combustible (11) résulte par l'air fourni.

2. Un module de pile à combustible selon la revendication 1,
**caractérisé en ce que**
le bloc de piles (13) a une expansion axiale totale s_total dans la direction axiale (12) et le système d'alimentation en air (35) est configuré de telle sorte que l'air est fourni dans la chambre de distribution d'air (31) uniquement dans une zone d'alimentation (34) qui a une expansion axiale s_part dans la direction axiale (12) qui est plus petite que l'expansion axiale totale s_total du bloc de piles (13).

3. Un module de pile à combustible selon la revendication 2,
**caractérisé en ce que**
l'expansion axiale s_part de la zone d'alimentation (34) a un maximum de 80 %, en particulier un maximum de 70 % et surtout un maximum de 50 % de l'expansion axiale totale s_total du bloc de piles (13).

4. Un module de pile à combustible selon la revendication 2 ou 3,
**caractérisé en ce que**
la chambre de distribution d'air (31) a une première zone résiduelle (36) avec une expansion axiale s_rest1 dans laquelle aucun air n'est fourni, et la première zone résiduelle (36) est disposée à une première extrémité (16) du bloc de piles (13).

5. Un module de pile à combustible selon la revendication 4,
**caractérisé en ce que**
la chambre de distribution d'air (31) a une deuxième zone résiduelle (37) avec une expansion axiale s_rest2 dans laquelle aucun air n'est fourni, et la deuxième zone résiduelle (37) est disposée à une deuxième extrémité (17) du bloc de piles (13) opposée à la première extrémité (16).

6. Un module de pile à combustible selon la revendication 5,
**caractérisé en ce que**
la première et la deuxième zone résiduelle (36, 37) ont des expansions axiales différentes s_rest1, s_rest2.

7. Un module de pile à combustible selon l'une des revendication 1 à 6,
**caractérisé en ce que** les piles à combustible (11) ont un interconnecteur (41) et un élément PEN (42, 43) et **en ce que** des conduits d'interconnexion d'air (40) sont prévus entre l'interconnecteur (41) et l'élément PEN (42, 43) pour un passage d'air à travers celui-ci et **en ce que** les surfaces de section totale aux entrées (44) des conduits d'interconnexion d'air (40) ne sont pas identiques pour toutes les piles à combustible (11) du bloc de piles (13).

8. Un module de pile à combustible selon l'une des revendication 1 à 7,
**caractérisé en ce que**
le système d'alimentation en air (35) est configuré de telle sorte que l'air est conduit directement sur un composant qui est en échange thermique avec le bloc de piles (13), en particulier un conduit d'échappement (25) pour évacuer les gaz d'échappement des piles à combustible (11).

9. Un module de pile à combustible selon la revendication 8,
**caractérisé en ce que**
les piles à combustible (11) ont un contour extérieur arrondi (24) transversalement à la direction axiale (12) et quatre conduits de gaz d'échappement (25) sont disposés sur le contour extérieur (24).

10. Un module de pile à combustible selon l'une des revendication 1 à 9,
**caractérisé en ce que**
le bloc de piles (13) est disposé dans un manchon isolant (28) qui présente des ouvertures de passage (29a, 29b, 29c, 29d, 29e) dans la zone d'alimentation (34).

11. Un module de pile à combustible selon la revendication 9 et 10,
**caractérisé en ce que**,
dans une position axiale de la zone d'alimentation (34), au plus une ouverture de passage (29a, 29b, 29c, 29d, 29e) est affectée à chaque conduit d'échappement (25).

12. Un module de pile à combustible selon la revendication 11,
**caractérisé en ce que**
un élément d'alimentation (32) avec une chambre d'alimentation (30) est disposé sur le manchon isolant (28) de telle sorte que les ouvertures de passage (29a, 29b, 29c, 29d, 29e) sont reliées à la chambre d'alimentation (30) et l'élément d'alimentation (32) a une expansion axiale s_ver qui est plus petite que l'expansion axiale totale s_total du bloc de piles (13).

13. Un module de pile à combustible selon la revendication 12,
**caractérisé en ce que**
le manchon isolant (28) a un contour extérieur arrondi et l'élément d'alimentation (32) est disposé de manière annulaire autour du manchon isolant (28).

14. Un module de pile à combustible selon la revendication 12 ou 13,
**caractérisé en ce que**
l'élément d'alimentation (32) n'a qu'une seule pièce de raccordement d'air (33).

15. Une méthode de fonctionnement d'un module de pile à combustible avec
- des piles à combustible (11) disposées dans un bloc de piles (13) et
- un système d'alimentation en air (35) pour fournir de l'air dans un espace de distribution d'air (31) pour faire fonctionner ou refroidir les piles à combustible (11),
dans lequel les piles à combustible (11) sont empilés dans une direction axiale (12),
dans lequel le système d'alimentation en air (35) est disposé complètement radialement à l'extérieur du bloc de piles (13), **caractérisé en ce que** les piles à combustible (11) sont refroidies de manière non uniforme et fortement dans la direction axiale (12).
